# EUROPEAN PATENT APPLICATION

(11) **EP 1 906 686 A1**
(43) Date of publication of application: **02.04.2008**
(21) Application number: 06460033.1
(22) Date of filing: 29.09.2006
(51) Int. Cl.: H04Q 7/32

(54) **Method, base station and user equipment for cell search in a communications system**

(71) Applicant: Nokia Siemens Networks GmbH & Co. KG, 81541 München (DE)
(72) Inventor: Chmiel, Mieszko, 48-340 Glucholazy (PL); Raaf, Bernhard, 82061 Neuried (DE)

(57) **Abstract**

The present invention provides a method for transmitting at least one channel for cell search in a communications system. The communications system uses a system carrier with a first centre frequency. This first centre frequency is aligned with a first channel raster. The channel for cell search has a second centre frequency which is shifted by adding an offset to the first centre frequency. The offset is chosen in a way that the second centre frequency is aligned with a second channel raster. The second channel raster is a subset of said first channel raster.

Furthermore, the present invention provides a method for cell search in a communications system. The communications system uses a system carrier with a first centre frequency. The first centre frequency is aligned with a first channel raster. At least one channel for cell search is transmitted, and a user equipment searches for this channel for cell search according to a second channel raster. The second channel raster is a subset of said first channel raster.

Additionally, the present invention provides a base station and a user equipment for executing the presented methods.

## Description

The present invention relates to a method, base station and user equipment for cell search in a communications system.

A mobile communications system, particularly a wireless cellular system, is organised in form of neighbouring cells with each cell being served by a base station. The base station provides communication facilities to and from user equipments (UE), i.e. terminals of mobile subscribers.

Enhanced UTRA (E-UTRA) is the Long Term Evolution (LTE) of the Universal Mobile Telecommunications System (UMTS) currently standardised in the 3rd Generation Partnership Project (3GPP). Orthogonal Frequency Division Multiple Access (OFDMA) is considered for the downlink (DL) air interface of E-UTRA.

According to the document 3GPP TR 25.814 V7.0.0 (2006-06), cell search is the procedure by which a UE acquires time and frequency synchronization with a cell and detects the Cell ID of that cell. E-UTRA cell search is assumed to be based on two signals ("channels") transmitted in the downlink, the "SCH" (Synchronization Channel) and "BCH" (Broadcast Channel). The document further states that the primary purpose of the SCH is to enable acquisition of the received timing and frequency of the downlink signal. Furthermore it is defined in the document that the UE can obtain the remaining cell/system-specific information from the BCH, SCH and also from some additional channels, such as the reference symbols. The primary purpose of the BCH, according to the document, is to broadcast a certain set of cell and/or system-specific information similar to the current UTRA BCH transport channel.

BCH and SCH can be further divided into a primary BCH (P-BCH), primary SCH (P-SCH) and secondary SCH (S-SCH). The P-BCH is a subset of the BCH, comprising parameters for initial communication. The P-SCH is used for time and frequency synchronization, while the S-SCH is used for transmitting a physical cell ID (or cell ID group) and for frame timing detection.

The invention holds for all combinations of BCH, SCH, P-BCH, P-SCH and S-SCH. Therefore, in the following the term "a channel for cell search" is used, covering all above described combinations.

Currently in E-UTRA, the following system bandwidth (BW) options in the concept of scalable bandwidth are considered: 1.25, (1.6), 2.5, 5, 10, and 20 MHz. The minimum Terminal Receiver (Rx)/Transmitter (Tx) BW capability (10 MHz) is less than the maximum system bandwidth.

The bandwidth of the downlink SCH and the BCH are assumed to be equal to the minimum system bandwidth, i.e. 1.25 MHz or 5 MHz. In the current implementation, the bandwidth of the downlink SCH and the BCH is assumed to be equal to the effective part of the system bandwidth, i.e. minimum system bandwidth x bandwidth efficiency, e.g. 1.25 x 90% = 1.125 MHz. Bandwidth efficiency here means the percentage of the system bandwidth that is used for effective transmission/reception. Currently, the E-UTRA bandwidth efficiency is 90%; however, 86.4 % is also likely for 1.25 MHz and 2.5 MHz.

The cell search for UMTS and LTE, e.g. for initial cell search, neighbour cell search or cell reselection, is defined by a hierarchical cell search algorithm. Therefore, the SCH is divided into the above mentioned P-SCH, implemented as an explicit channel, and into the above mentioned S-SCH. The S-SCH is an explicit channel or the reused reference signal with direct detection. Further cell/configuration-specific information (e,g. system bandwidth, antenna configuration etc.) is obtained by the UE from the BCH which can be read after P-SCH and S-SCH detection.

According to the document TR 25.814, SCH and P-BCH are mapped to the centre of the system carrier. System carrier here means the E-UTRA carrier or RF channel defined by a specific centre frequency and a system bandwidth. Furthermore, the concept of a channel raster is considered to be used in E-UTRA in order to regulate adjacent channel interference (ACI) due to out-of-band emissions. The channel raster defines all admissible positions for the centre frequency of the system carrier in the E-UTRA band. E-UTRA band here is a specified, contiguous portion of the RF spectrum that can be used to deploy multiple E-UTRA carriers. The centre frequency of the system carrier is aligned with the channel raster, as the centre frequency of the system carrier is placed on an element (i.e. one possible position as defined in the system) of the raster.

According to the document 3GPP TS 25.104 version 6.4.0 Release 6, the channel raster is 200 kHz for all bands, which means that the centre frequency of the system carrier must be an integer multiple of 200 kHz. In addition, a number of additional centre frequencies are specified, which means that the centre frequencies for these channels are shifted 100 kHz relative to the general raster.

The above assumptions lead to the following conclusions: The SCH (and BCH/P-BCH) bandwidth can be less than a carrier bandwidth. Since the SCH is mapped to the centre of the corresponding system carrier, there are several frequency positions in a given bandwidth allocation of the system carrier, where the SCH can be transmitted. Those positions are searched during initial cell search. Therefore, the number of possible centre frequencies (that the user equipment searches for the SCH during cell search, i.e. hypothesis testing) is proportional to the total bandwidth available for the system and inversely proportional to the channel raster spacing. In case the spacing of the raster is not uniform, like it is the case for the above mentioned additional channels which are shifted 100 kHz relative to the rest of the raster, the number of possible centre frequencies is inversely proportional to the average channel raster spacing.

As a result, the overall system performance is decreased due to necessary cell search time and complexity. One negative aspect of this is a decreased UE battery life.

For the Global System for Mobile Communications (GSM) and the corresponding GSM EDGE Radio Access Network (GERAN), there are fixed places in the frequency domain for certain carriers. As the channel bandwidth for GSM/GERAN is too small (200 kHz) to shift the centre frequency of a given radio frequency channel, the concept of a channel raster is not used to control ACI.

For W-CDMA (Wideband Code Division Multiple Access) and the corresponding UMTS Terrestrial Radio Access Network (UTRAN), which operates only on a 5 MHz channel bandwidth, a fixed channel raster of 200 kHz is used. The effective bandwidth is 3.84 MHz, and this is also the bandwidth of the Synchronization Channels. This means that the centre frequency of an UTRA carrier can be adjusted with a 200 kHz step. Additionally, in some cases the centre frequency can be in the distance of 100 kHz to the nominal channel raster (e.g. in the centre of a spectrum allocation, with a spectrum allocation defined as the part of an E-UTR.A band that can be used to deploy a single E-UTRA carrier). This flexibility allows operators to shift their assigned spectrum and control adjacent channel interference.
However, the centre frequency of SCHs is equal to the centre frequency of the corresponding UTRA carrier. This makes it very hard for a UE to find the SCH during initial cell search because it has to search every 200 kHz. I.e. if the UMTS spectrum consists of 40 MHz then the UE has to search some (40MHz-5MHz)/200kHz = 175 possible locations even though in 40 MHz there can be only 8 carriers of 5 MHz. So there is inefficiency for the initial cell search of the factor 25 = 5 NIE3z/20bkHz .

For the Long Term Evolution of the 3GPP radio technology with respect to E-UTRA, it is assumed that although the SCH and BCH bandwidth may be less than an effective bandwidth, the centre frequency of the SCH and BCH is equal to the centre frequency of the corresponding E-UTRA carrier. Furthermore, the concept of a channel raster is assumed to be reused in E-UTRA. Therefore, the SCH and an E-UTRA carrier are mapped according to the same channel.

Additionally, for LTE it is considered to transmit the SCH in the middle of the left and the right half of the effective bandwidth, in case the system bandwidth is 20 MHz. It is done to allow UEs limited to 10 MHz bandwidth and connected using the Radio Resource Control (RRC) protocol to read the SCH from neighbouring cells. These UEs may camp in the left or the right half of the effective bandwidth and therefore have to be able to find a SCH in either half. Consequently, one SCH per half has to be allocated additionally, reducing overall available system bandwidth.

It is an aim of the invention to address the problems discussed above.

Said problems are solved by the features mentioned in the independent claims. Preferred embodiments of the invention are described in the dependant claims.

The present invention provides a method for transmitting at least one channel for cell search in a communications system. The communications system uses a system carrier with a first centre frequency. This first centre frequency is aligned with a first channel raster. The channel for cell search has a second centre frequency which is shifted by adding an offset to the first centre frequency. The offset is chosen in a way that the second centre frequency is aligned with a second channel raster. The second channel raster is a subset of said first channel raster.

Furthermore, the present invention provides a method for cell search in a communications system. The communications system uses a system carrier with a first centre frequency. The first centre frequency is aligned with a first channel raster. At least one channel for cell search is transmitted, and a user equipment searches for this channel for cell search according to a second channel raster. The second channel raster is a subset of said first channel raster.

Additionally, the present invention provides a base station and a user equipment for executing the presented methods.

The proposed invention provides the advantage that the cell search time and complexity during cell search are reduced by decreasing the number of possible frequency domain positions of the channel for cell search, while a higher number of possible frequency domain positions of the system carrier is maintained. This allows to flexibly regulate adjacent channel interference.

In the following, the invention is described for an E-UTRA communications system. This does not limit the invention to E-UTRA systems, as the invention is applicable to any communications system based on frequency-based carriers and initial cell search channels. Furthermore, the SCH is used as an example for an initial cell search channel for describing the invention. As written above, the invention holds for all combinations of BCH, SCH, P-BCH, P-SCH and S-SCH as well as for any other kind of channels used for initial cell search search (e.g. reference signal/pilot).

In principle it is proposed to decouple the frequency domain mapping of a system carrier from the frequency domain mapping of the initial cell search channel. This is done by introducing a second channel raster which is coarser than the fine channel raster used for aligning the centre frequency of the system carrier.

Preferred embodiments of the present invention will now be described with reference to the accompanying drawings in which:
Fig. 1: shows an example of the allocation of SCHs and the corresponding spectrum allocations according to the state of the art
Fig. 2: shows an example of the proposed relationship between the allocation of SCHs and the corresponding spectrum allocations
Fig. 3: shows an example of the allocation of SCHs and the corresponding spectrum allocations according to the state of the art for the case that the system carrier bandwidth exceeds the reception bandwidth of the mobile station
Fig. 4: shows an example of the allocation of SCHs and the corresponding spectrum allocations according to the invention for the case that the system carrier bandwidth exceeds the reception bandwidth of the mobile station
Fig. 5: shows an example of the allocation of system carriers to a system band
Fig. 6: shows an example of the allocation of system carriers to a system band and placement of SCHs according to the invention
Fig. 7: shows another example of the allocation of carriers to a system band and placement of SCHs according to the invention

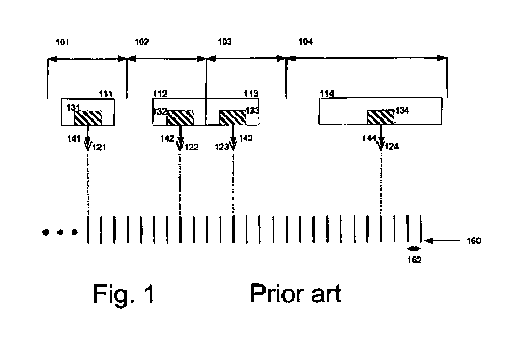

Fig. 1 shows a diagram of an example of the allocation of SCHs and the corresponding spectrum allocations according to the state of the art. In this and in the related other plots the frequency axis is drawn horizontally, in the vertical direction different allocations and raster positions are plotted.

Horizontal arrows indicate the spectrum allocations 101 ... 104, in this example there are three spectrum allocations 101 ... 104 of equal size e.g. 5 MHZ and one broader spectrum allocation of e.g. 10 MHz. The borders between these spectrum allocations 101 ... 104 are visualized by perpendicular lines. Within these spectrum allocations 101 ... 104 the operators may choose to place system carriers 111 ... 114 for communication. These system carriers 111 - 114 have first centre frequencies 121 ... 124 as indicated by arrows and an effective bandwidth which is less than the spectrum allocation. Each of these system carriers 111 ... 114 contains a channel for initial cell search 131 ... 134 (SCH, for synchronisation channel) which is indicated by hatched boxes. Each SCH 131 ... 134 is also characterised by its second centre frequency 141 ... 144 which is indicated by an arrow as well and coincides with the respective first centre frequency 121 ... 124 of the respective system carrier 111 ... 114.

Each first centre frequency 121 ... 124 and each second centre frequency 141 ... 144 is aligned with a first channel raster 160, i.e. it coincides with an element of the first channel raster 160. This first channel raster 160 is the set of all possible carrier centre frequencies as admissible in the communications system. The first channel raster 160 has a fine raster spacing 162.

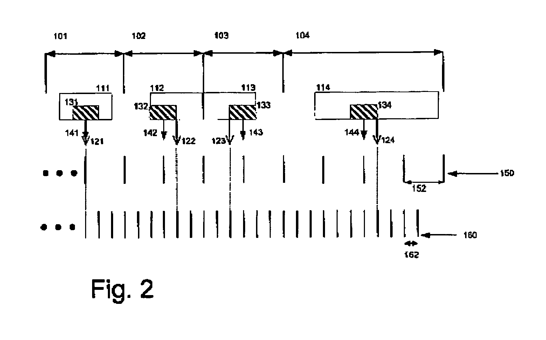

Fig. 2 shows a diagram of an example of the proposed relationship between the allocation of SCHs and the corresponding spectrum allocations. Again the frequency axis is drawn horizontally, in the vertical direction different allocations and raster positions are plotted. The same reference numbers are used to identify the corresponding items as in Fig. 1.

Horizontal arrows indicate the spectrum allocations 101 ... 104, in this example there are three spectrum allocations 101 ... 104 of equal size e.g. 5 MHZ and one broader spectrum allocation of e.g. 10 MHz. The borders between these spectrum allocations 101 ... 104 are visualized by perpendicular lines. Within these spectrum allocations 101 ... 104 the operators may choose to place system carriers 111 ... 114 for communication. These system carriers 111 ... 114 have first centre frequencies 121 ... 124 as indicated by arrows.

The effective system bandwidth is typically smaller than the system bandwidth, because some guard bands are required to make sure the emissions from one carrier are sufficiently damped by the filters in order not to have a too harmful deterioration on the reception in the adjacent carrier. The interference between collocated carriers, typically belonging to the same operator and therefore typically installed on the same sites, is less than between non co-located ones. Still each centre frequency does coincide with the first channel raster 160, having a fine spacing. This first channel raster 160 is the set of all possible carrier centre frequencies as admissible in the system, visualized by a set of vertical lines in Fig. 1. These lines have a certain distance or fine raster spacing 162 from one another. In order to be able to fine tune the system carrier allocation in the system band, it is necessary to select the fine raster spacing 162 sufficiently small, in particular well smaller than the bandwidth of a system carrier 111 ... 114. So the first centre frequencies 121 ... 124 of the system carriers 111 114 are not put in the middle of the corresponding spectrum allocations 101 ... 104 but are offset somewhat to optimise the interference, in particular the interference to and from other operators.

Within each system carrier 111 ... 114 there is a SCH 131 ... 134 which is indicated by a hatched box in Fig. 1. Each SCH 131 ... 134 is also characterized by its second centre frequency 141 ... 144 which is indicated by an arrow as well.
According to the state of the art, the first centre frequencies 121 ... 124 of system carriers 111 ... 114 always coincide with the second centre frequencies 141 .- 144 of the according SCHs 131 ... 134, as in Fig. 2 it is the case for the leftmost system carrier 111.
According to the invention, however, the second centre frequency 141 ... 144 of the according SCH 131 ... 134 is not necessarily aligned with the first centre frequency 121 ... 124 of the respective system carrier 111 ... 114. Instead, there may be a deviation, and consequently the SCH 131, ... 134 is not necessarily situated in the middle of the according system carrier 111 ... 114 , i.e. its second centre frequency 141 ... 144 does not coincide with the first centre frequency 121, ... 124. Instead, the position of the SCH 131 ... 134 within the system carrier 111 ... 114 is selected in a way that the second centre frequency 141 ...144 coincides with a raster position of a second channel raster 150, the so called coarse SCH raster. This second channel raster 150 is the set of all the predefined coarse raster positions which are indicated as vertical lines in Fig. 2. The distance or spacing 152 of these lines is selected to be larger than the fine carrier spacing 162.

When scanning for a system carrier 1.11 ... 114, ore more precisely, for the SCH 131 ... 134 within the system carrier 111 ... 114 according to the invention, the mobile station does not have to scan the frequencies at the fine raster positions of the first channel raster 160 but only at the coarse raster positions of the second channel raster 150. Because the latter are less dense, or equivalently, because there are less coarse raster positions than fine raster positions, the search for the SCH 131 ... 134 is less complex, faster and more reliable compared to the state of the art.

In order to simplify the figures, the fine carrier raster of the first channel raster 160 has been chosen to be comparatively coarse, in the figure the fine carrier raster spacing 162 is 1/4 ^{th} of the coarse SCH raster spacing 152.
The invention is however of course also applicable for the case that the first channel raster 160 is even finer compared with the second channel raster 150. In this case, the system carriers 111 ... 114 can be more efficiently placed to optimise the inter carrier interference situation. At the same time the advantage due to having only to search the coarse instead of the fine raster during initial cell search becomes even more pronounced.

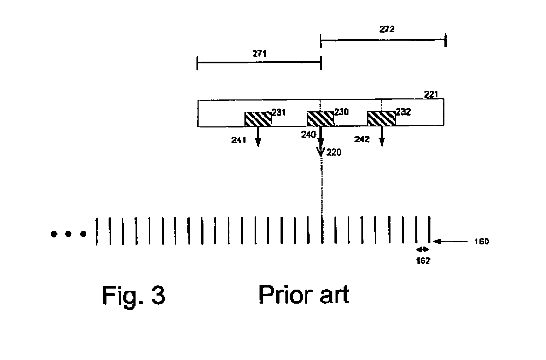

Fig. 3 shows a diagram of an example of the allocation of SCHs and the corresponding spectrum allocations according to the state of the art for the case that the carrier bandwidth exceeds the reception bandwidth of the mobile station, specifically in this case the reception bandwidth is half the (effective) carrier bandwidth. Items which have already been presented in the previous figures are marked with the same numbers and the description is not repeated here.

The reception bandwidth 271, 272 is indicated by bars which indicate two possible allocations of the reception bandwidth of UEs which are camped on a first system carrier 221 with a first carrier centre frequency 220. The first system carrier 221 also transmits a first SCH 230 in its centre, indicated by a hatched box. The first SCH centre frequency 240 coincides with the first carrier centre frequency 220. Mobile stations whose reception bandwidth 271, 272 is set to either half of the system carrier cannot (fully) receive the first SCH 230 in the centre. Therefore, two auxiliary SCHs 231, 232 are also transmitted in the centres of either half of the effective carrier bandwidth with the second and third SCH centre frequencies 241, 242 in order to also allow these mobile stations to do neighbour cell search.

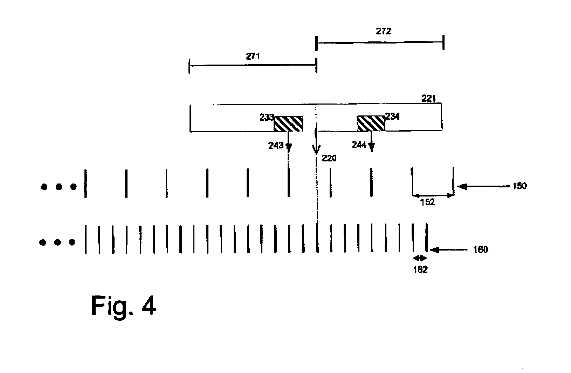

Fig. 4 shows a diagram of an example of the allocation of SCHs and the corresponding spectrum allocations according to the invention for the case that the carrier bandwidth exceeds the reception bandwidth of the mobile station, again for the case that the reception bandwidth is half the (effective) carrier bandwidth. Items which have already been presented in the previous figures are marked with the same numbers and the description is not repeated here.

According to the invention no SCH is transmitted in the centre of the carrier.
Instead two SCHs 233, 234 are transmitted in either half of the effective carrier bandwidth with SCH centre frequencies 243, 244. These SCHs 233, 234 are not (necessarily) located exactly in the centre of either halve of the system carrier 221. Instead a first SCH 233 is completely located in the left half of the system carrier 221 in such a way, that the according first SCH centre frequency 243 is aligned with the second channel raster 150 which is the coarse raster as described above. This first SCH 233 can both be used for the initial cell search, as it is aligned with the coarse fist channel raster 150, and for the neighbour cell search, as it is fully within the first reception bandwidth 271. Similarly, the second SCH 234 is transmitted in the upper half of the carrier bandwidth, fully within the second reception bandwidth 272, and may also be aligned with the second channel raster 150, but this is not strictly necessary. Compared to Fig. 3, only the two SCHa 233, 234 are transmitted instead of three SCHs.

In a further refinement of the method, the second SCH 234 in the other bandwidth half 272 of the 20 MHz bandwidth is also offset from the centre frequency 220 of the 20 MHz by at least half the SCH bandwidth (and preferably to the coarse raster). Consequently, this second SCH 234 can not only support the neighbour cell search but also the initial cell search. Therefore, a UE can camp onto the cell if it has detected any of the two SCHs 233, 234. This refinement speeds up initial cell search and makes it more robust.

m a further refinement of the method, the first and the second SCH 233, 234 are transmitted alternating. This refinement halves the SCH overhead and still provides the same initial cell search capability.

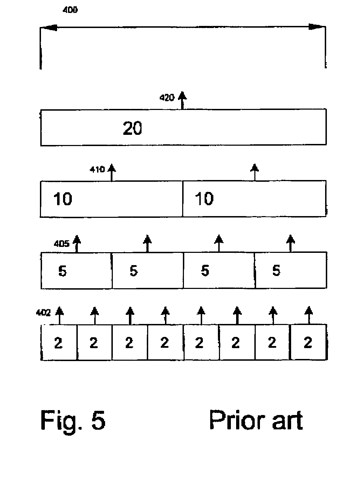

Fig. 5 shows a diagram of an example of the allocation of spectrum allocations to a system band 400, the size of which is visualized by a horizontal double arrow. The size of the system band 400 is 20MHz in this example. This system band can be filled with spectrum allocations 2, 5, 10, 20 of different sizes as indicated by the set of boxes below. A scenario like this can be described as a bandwidth configuration for the system carrier. Each row gives an example of filling the system band with spectrum allocations 2, 5, 10, 20 of different sizes:
- In the first row with a first spectrum allocation 20 of 20 MHz
- In the second row with second spectrum allocations 10 of 10 MHz
- In the third row with third spectrum allocations 5 of 5 MHz
- In the forth row with fourth spectrum allocations 2 of 2.5 MHz

The SCHs are not shown with own boxes as in previous figures for the sake of clarity of the Fig. 5, only the SCH centre frequencies 402, 405, 410, 420 are indicated by arrows. According to the state of the art, the SCH is placed in the middle of the system carrier placed in the spectrum allocation as indicated by the set of arrows showing the SCH centre frequencies 420, 410, 405, 402. As a consequence, the SCH positions of a higher bandwidth spectrum allocation do not overlap with any of the SCH positions of any lower bandwidth spectrum allocation. This is apparent from the figure as no two arrows are vertically aligned. As the mobile station doesn't have prior knowledge of the actually used bandwidth of the spectrum allocations it will have to search every potential SCH position that means that there are many potential positions to be searched. In the example of this figure, 15 potential SCH positions have to be searched. The figure does not visualize possible shifts off the centre due to the fine tuning approach, this would further multiply the number of potential SCH positions.

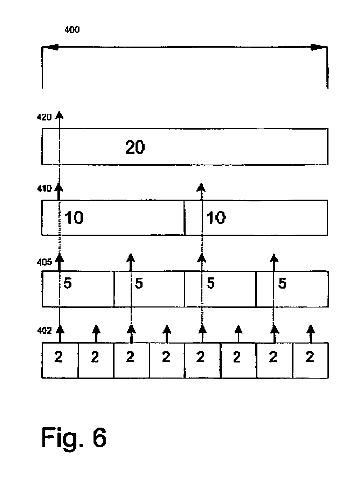

Fig. 6 shows a diagram of an example of the allocation of carriers within spectrum allocations to a system band, and placement of the SCHs according to the invention. The same reference numbers are used to identify corresponding items as in Fig. 5, and for such items the description for Fig. 5 still applies.
According to the invention the SCHs are now placed in such a way, that the SCH position of a carrier in a spectrum allocation 5, 10, 20 with broader bandwidth coincides with the SCH position of one of the system carriers of any of the cases where the system band is filled with system carriers of a spectrum allocation 2, 5, 10 with narrower bandwidth. This is visualized by the dotted lines that connect the arrows of the upper rows with one of the arrows of any of the lower rows and indicates that these arrows are vertically aligned. In the example of Fig. 6, this is achieved by placing the SCH at the leftmost position which overlaps with an SCH in the lowest row. However, other placements are possible as well, e.g. rightmost or generally starting with the lowest row and placing the SCHs of the next row always aligned to one of the SCHs of the next lower row. In the example of Fig. 6, eight potential SCH positions have to be searched, almost only half as many as in the scenario shown in Fig. 5.

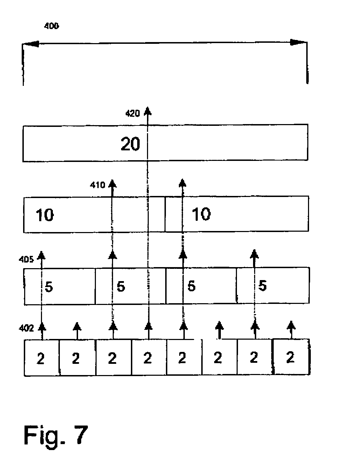

Fig. 7 shows a diagram of another example of the allocation of carriers to a system band, and placement of the SCHs according to the invention. The same reference numbers are used to identify corresponding items as in Fig. 5 and 6, and for such items the description for Fig. 5 and 6 still applies. According to the invention the SCHs are now placed in such a way, that the SCH position of a system carrier in a spectrum allocation 5, 10, 20 with broader bandwidth coincides with the SCH position of one of the system carriers of at least one of the cases where the system band is filled with carriers of a spectrum allocation 2, 5, 10 with narrower bandwidth. This is visualized by the dotted lines that connect the arrows of the upper rows with at least one arrow of at least one of the lower rows and indicates that these arrows are vertically aligned. Again such an alignment can be obtained in several different ways, only one example is depicted in Fig. 7.
In Fig.7 the SCH of the 20 MHz spectrum allocation 20 is not aligned with any of the SCHs of the 10 MHz allocation 10 or the 5 MHz allocation 5 but it is aligned with one of the SCHs of the 2.5MHz allocation 2. Therefore, like in Fig. 6, there are eight potential SCH positions that have to be searched, almost only half as many as in the scenario shown in Fig. 5.

The rasters as discussed above do not have to be strictly regular. In one refinement of the method, the SCH centre frequency and the system carrier centre frequency are additionally mapped to the centre of the spectrum allocation, if the coarse or fine raster respectively do not overlap with the centre of the spectrum allocation, similar to the 100khz shift used in UMTS and described above. Furthermore, the second coarse SCH raster does not necessarily have to be a strict subset of the first raster, instead it may be offset to a subset or each individual raster element may be offset individually to a raster element of a subset of the first raster. Alternatively, the second raster is simply a raster with considerably less raster positions than the first raster, e.g. at most half as many, but the raster positions of the second raster do not have to have any specific relation to at least some of the raster positions of the first raster. The first raster may also be chosen as a collection of first raster positions, not necessarily equally spaced. For example, the frequencies of the first raster positions can be chosen according FD + N * AB + K * OF where F0 is a starting frequency for the first spectrum allocation, N is an integer between 0 and a maximum value Nmax, AB is the (minimum) spectrum allocation bandwidth e.g. 20MHz, 10 MHz, 5 MHz, 2.5 MHz or 1,25MHz, OF is an offset value indicating the (minimum) distance between first raster elements and K is an integer between Kmin and Kmax, typically Kmin is negative and Kmax is positive and both -Kmin * OF and Kmax * OF is smaller than AB. The frequencies of the second raster positions can then be chosen according F0 + N * AB.

In a further refinement of the method, the coarse raster size of the second channel raster is a multiple of the fine raster size of the first channel raster.

In a further refinement of the method, the fine raster size of the first channel raster is a multiple of a sub-carrier spacing. For instance, the fine raster size is 15 kHz or a multiple thereof. For legacy reasons it may be 200 kHz or 100 kHz as well.

In a further refinement of the method, the coarse and fine raster size or the above mentioned offset value OF may be a multiple of the frequency domain resource block size (N x 180 kHz i.e. N×12×15 kHz).

In a further refinement of the method, the second channel raster is a multiple or part (e.g. half) of one of the system bandwidths (e.g. 1.25 MHz, 1.6 MHz, 2.5 MHz, 5 MHz, 10 MHz, 15 MHz, and 20 MHz). Additionally, it can depend on the actually used system bandwidths (the actually used system BWs in a given band may be a predefined subset of all system bandwidths) within a given frequency band, or on the frequency band, where the system band is deployed (e.g. in 900MHz or 1800MHz band). That means that the second channel raster may be tighter in some bands, e.g. in the 900 MHz band to ease coexistence with other systems in this band e.g. legacy systems like the GSM or UMTS system, but less tight in other bands e.g. in freshly allocated extension bands.

During initial cell search, the UE tests only the frequencies satisfying the coarse raster, i.e. the second channel raster, subsequently the UE must acquire the centre frequency of the E-UTRA carrier (mapped to satisfy the fine raster, i.e. the first channel raster) of the cell that was selected. This may be accomplished by the following alternative steps:

In one refinement of the method, an explicit information regarding the fine raster position of the centre frequency of the system carrier, e.g. the E-UTRA carrier, is transmitted together with the P-SCH or S-SCH (similarly to the code group which is "coded" in the S-SCH in UMTS).

In another refinement of the method, the UE attempts to decode the BCH on every possible fine raster position of the first channel raster that may belong to the found SCH position. In this case, the hypothesis testing for the fine raster is shifted from the SCH search stage to the BCH detection stage. This is advantageous because several hypotheses have then only to be tested if an SCH was already found and not for every possible spectrum allocation.

In another refinement of the method, the bandwidth of the SCH is reduced to a value below the smallest available specified system bandwidth. Then the SCH can be shifted relatively to the centre frequency by an amount of exactly the difference between SCH bandwidth and smallest available specified system bandwidth. This refinement allows to use the invention even in the case that the smallest available specified system bandwidth is used.

In another refinement, the first channel raster is implicitly restricted in the case of small system bandwidths in the following way: Only those raster elements of the first channel raster are allowed, that allow to place the SCH centre frequency on a raster element of the second channel raster. Consequently elements of the first channel raster that are too far away from an element of the second channel raster than the maximum shift of the SCH within the effective system bandwidth are not allowed. The threshold for "too far away" is typically half the difference of SCH bandwidth and effective system bandwidth. Therefore for large enough system bandwidths this is not a restriction any more and all raster elements of the first raster are valid.

A resource block (RB) is a container for physical channel symbols, describing how data of different logical channels are to be mapped onto physical channels. RBs provide the basic structure upon which logical channel data can be multiplexed to be transmitted over a physical channel after being mapped into channel symbols. In certain cases, the SCH bandwidth which typically includes an integer number of RBs, will not fit into the resource block grid due to the usage of the coarse raster concept (e.g. when the fine raster size, or more precisely, the difference between the first raster element which is used for the carrier centre frequency and the second raster element indicating the SCH centre frequency is not a multiple of the RB size). In such a case, the leftovers of the divided RBs are either used for data or control signalling transmission, or they are not used and e.g. punctured in case only few sub-carriers are left in a RB.
Therefore, in another refinement of the method, the SCH either splits the RBs, or the SCH is shifted (in the frequency domain) to fit the RB grid. The latter implies that the difference between the first raster element which is used for the carrier centre frequency and the second raster element indicating the SCH centre frequency is a multiple of the RB size. In order to achieve this relation, the first raster and second raster are chosen to comply with this relation. This can be easily achieved, e.g. by first selecting the second raster and then selecting additional raster elements for the first raster in a distance of a multiple of the RB size from a second raster element.
In another embodiment, instead of a multiple of the RB size a multiple of the sub carrier spacing is selected. In this case the offset between the SCH centre frequency and the carrier centre frequency is also a multiple of the sub carrier spacing. In OFDMA systems such a frequency offset can be easily implemented by placing the SCH not on the central sub carriers in the centre but shifting the allocation by multiple sub carriers. Likewise in the receiver such a shift can be implemented similarly.

In another refinement of the method, a common channel like the BCH (mapped on the coarse raster, i.e. the second channel raster) is read for getting the absolute value or the identifier (like an Absolute RF Channel Number, ARFCN) of the carrier frequency. Alternatively, an offset from the carrier centre frequency to the centre SCH frequency determined by the UE during SCH detection may be transmitted on the BCH. The offset may be an absolute value or an identifier indicating a number of predefined frequency steps. This latter convention can be coded in fewer bits because only the difference has to be expressed. For this purpose, it may be necessary to transmit the BCH carrier also on the coarse raster and not on the fine raster. That means that the BCH is not well aligned to the (other) Resource Blocks, as discussed above for the SCH. Due to this, some Resource Blocks need to be (partly) dropped to make the misaligned BCH fit into the Resource Blocks. This may be a reason to align the coarse raster with the Resource Block bandwidth. Alternatively, the BCH can be split into two parts, one that is read immediately after SCH detection and carries the bandwidth information (possibly some other information as well), and another part which is aligned with the Resource Blocks and carries the rest of the information.

Concluding, the invention has at least the following advantages compared to solutions known in the state of the art:
The initial cell search time is reduced, and battery life of UEs is extended. Furthermore, the initial cell search gets more reliable because fewer hypotheses need to be tested, and consequently it is less likely that a false hypothesis is selected. The overall cell search and UE complexity is decreased. Additionally, intra-frequency measurements are simplified.

The proposed method can be particularly applied to the OFDMA based downlink of the E-UTRA system for cell search, e.g. initial cell search, neighbour cell search or cell reselection.

## Claims

1. Method for transmitting at least one channel for cell search (131-134,230-234) in a communications system, wherein a system carrier (111-114,221) with a first centre frequency (121-124,220) is used, and wherein said first centre frequency (121-124,220) is aligned with a first channel raster (160), and wherein said channel for cell search (131-134,230-234) has a second centre frequency (141-144,240-244), and wherein said second centre frequency (141-144,240-244) is shifted by adding an offset to said first centre frequency (121-124,220) in a way that said second centre frequency (141-144,240-244) is aligned with a second channel raster (150), and wherein said second channel raster (150) is a subset of said first channel raster (160).

2. Method for cell search in a communications system, wherein a system carrier (111-114,221) with a first centre frequency (121-124,220) is used, and wherein said first centre frequency (121-124,220) is aligned with a first channel raster (160), and wherein at least one channel for cell search (131-134,230-234) is transmitted, and wherein a user equipment searches for said channel for cell search (131-134,230-234) according to a second channel raster (150), and wherein said second channel raster (150) is a subset of said first channel raster (160).

3. The method according to claim 1 or 2, wherein said communications system offers a variety of bandwidth configurations, and wherein for each bandwidth configuration said second channel raster (150) in a first bandwidth configuration using higher bandwidths (5, 10, 20) is a subset of said second channel raster (150) in a second bandwidth configuration using lower bandwidths (2, 5, 10).

4. The method according to any preceding claim, wherein a second channel raster size (152) of said second channel raster (150) is a multiple of a first channel raster size (162) of said first channel raster (160).

5. Base station with means for transmitting at least one channel for cell search (131-134,230-234) in a communications system in which a system carrier (111-114,221) with a first centre frequency (121-124,220) is used, and in which said channel for cell search (131-134,230-234) has a second centre frequency (141-144,240-244), with means for aligning said first centre frequency (121-124,220) with a first channel raster (160), and with means for shifting said second centre frequency (141-144,240-244) by an offset to said first centre frequency (121-124,220) in a way that said second centre frequency (141-144,240-244) is aligned with a second channel raster (150), with said second channel raster (150) being a subset of said first channel raster (160).

6. User equipment with means for cell search in a communications system in which a system carrier (111-114,221) with a first centre frequency (121-124,220) is used, and in which said first centre frequency (121-124,220) is aligned with a first channel raster (160), and in which at least one channel for cell search (131-134,230-234) is transmitted, with means for searching for said channel for cell search (131-134,230-234) according to a second channel raster (150) with said second channel raster (150) being a subset of said first channel raster (160).

7. User equipment as in claim 5, further comprising means for determining an offset of a second centre frequency (141-144,240-244) of said channel for cell search to said first centre frequency of said system carrier.

8. Communications system with at least one base station according to claim 5 and at least one user equipment according to claim 6 or 7.
